(19) Europäisches Patentamt
European Patent Office
Office européen des brevets

(11) **EP 3 890 083 A1**

(12) **EUROPEAN PATENT APPLICATION**
published in accordance with Art. 153(4) EPC

(43) Date of publication:
06.10.2021 Bulletin 2021/40

(21) Application number: 19888369.6

(22) Date of filing: 25.11.2019

(51) Int Cl.:
*H01M 8/1053* (2016.01)    *H01M 8/106* (2016.01)
*H01M 8/1067* (2016.01)    *H01M 8/1081* (2016.01)
*H01M 8/18* (2006.01)

(86) International application number:
PCT/KR2019/016237

(87) International publication number:
WO 2020/111687 (04.06.2020 Gazette 2020/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.11.2018 KR 20180152397

(71) Applicant: Lotte Chemical Corporation
Seoul, 05551 (KR)

(72) Inventors:
• JUNG, Min Suk
  Daejeon 34110 (KR)
• KIM, Hye Seon
  Daejeon 34110 (KR)
• KANG, In Bo
  Daejeon 34110 (KR)
• PARK, Sang Sun
  Daejeon 34110 (KR)

(74) Representative: Germain Maureau
12, rue Boileau
69006 Lyon (FR)

(54) **SEPARATOR FOR REDOX FLOW BATTERY AND MANUFACTURING METHOD THEREFOR**

(57) The present invention relates to a separator for a redox flow battery and a manufacturing method therefor, the separator comprising: a porous substrate; and an ionomer coating layer provided on at least one surface of the porous substrate, wherein the ionomer coating layer comprises an ion conductive resin containing ion clusters having a diameter in the range of $3\ nm < d_c < 6\ nm$, as measured by small-angle X-ray scattering (SAXS) in water at 25°C.

[Fig. 4]

EP 3 890 083 A1

**Description**

[Technical Field]

The present invention relates to a separator for a redox flow battery and a manufacturing method therefor.

[Background Art]

As existing power generation systems such as thermal power generation, which causes large amounts of greenhouse gases using fossil fuels or nuclear power generation having problems with the stability of facilities themselves or waste disposal reveal various limitations, studies on the development of energy that is more eco-friendly and highly efficient and the development of a power supply system that uses the energy have been increasing significantly.

In particular, since power storage technology can make renewable energy, which is greatly affected by external conditions, more diverse and widely available and enhance the efficiency of power utilization, development is being concentrated in these technical fields, and among them, interest in secondary batteries and research and development thereof have increased significantly.

A redox flow battery refers to an oxidation/reduction battery capable of directly converting the chemical energy of an active material into electrical energy, and is an energy storage system capable of storing new renewable energy with severe output fluctuations depending on external environments such as sunlight and wind power and converting the energy into high-quality electric power. Specifically, in a redox flow battery, an electrolytic solution including an active material that causes a redox reaction circulates between a counter electrode and a storage tank, and charging/discharging proceeds.

Such a redox flow battery basically includes a tank in which active materials having different oxidation states are stored, a pump that circulates the active material during charging/discharging, and a unit cell partitioned with a separator, and the unit cell includes an electrode, an electrolyte, and a separator.

The separator of the redox flow battery is a key material that serves to generate a current flow through the movement of ions (for example, $Zn^{2+}$, $Br^-$, $H^+$) produced in an anode electrolytic solution and a cathode electrolytic solution during charging/discharging and to isolate the resulting charged active materials (for example, $V^{2+}$, $V^{5+}$, $Br_2$-complex). Currently, it is common to use a separator for another secondary battery such as a lithium battery as a separator used in a redox flow battery, but there is a problem in that the self-discharge and energy efficiency deteriorates because charged active materials (for example, $V^{2+}$, $V^{5+}$, $Br_2$-complex) in the electrolytic solution produced during charge easily cross-over. That is, a separator typically used in a redox flow battery is vulnerable to crossover of charged active materials (for example, $V^{2+}$, $V^{5+}$, $Br_2$-complex), and a crossover phenomenon of charged active materials causes problems of self-discharge, an imbalance of electrolytic solution levels, and deterioration in energy efficiency.

US Patent No. 4190707 or Korean Patent No. 1042931 discloses a microporous separator for an alkaline battery or a secondary battery, but does not suggest a method which enables such a porous separator in the related art to prevent the crossover of ions between an anode electrolytic solution and a cathode electrolytic solution required for a redox flow battery, and the like.

Therefore, there is a need for developing a separator which enables ions for maintaining electrochemical neutrality to easily move, and can reduce the crossover of charged active materials causing self-discharge.

[Related Art Documents]

[Patent Document]

(Patent Document 1) US Patent No. 4190707
(Patent Document 2) Korean Patent No. 1042931

[Disclosure]

[Technical Problem]

The present invention has been made in an effort to provide a separator for a redox flow battery which enables ions to easily move in an electrolytic solution by providing an ionomer coating layer with a diameter of ion clusters adjusted on at least one surface of a porous substrate, a manufacturing method therefor, and a redox flow battery comprising the same.

[Technical Solution]

An exemplary embodiment of the present invention provides a separator for a redox flow battery, the separator comprising: a porous substrate; and an ionomer coating layer provided on at least one surface of the porous substrate, wherein the ionomer coating layer comprises an ion conductive resin containing ion clusters having a diameter in the range of $3 \text{ nm} < d_c < 6 \text{ nm}$, as measured by small-angle X-ray scattering (SAXS) in water at 25°C.

Another exemplary embodiment of the present invention provides a method for manufacturing the separator for a redox flow battery, the method comprising: (a) preparing a porous substrate; (b) forming an ionomer coating layer by applying an ionomer coating composition comprising an ion conductive resin and propylene carbonate on at least one surface of the porous substrate; and (c) removing the remaining propylene carbonate in the ionomer coating layer.

Still another exemplary embodiment of the present invention provides a redox flow battery comprising the separator.

[Advantageous Effects]

A redox flow battery according to an exemplary embodiment of the present invention has excellent ion conductivity, and can prevent the crossover of charged active materials in an electrolytic solution to improve the efficiency of the redox flow battery. Further, the separator for a redox flow battery has high durability, and thus also has an advantage in that operation costs of the redox flow battery can be lowered.

[Description of Drawings]

FIG. 1 illustrates a conceptual view of a general zinc-bromine redox flow battery.

FIG. 2 illustrates an FE-SEM image of the surface of a separator for a redox flow battery according to Comparative Example 1.

FIG. 3 illustrates an FE-SEM image of the surface of a separator for a redox flow battery according to Example 1.

FIG. 4 illustrates an FE-SEM image of the cross-section of a separator for a redox flow battery according to Comparative Example 1.

FIG. 5 illustrates an FE-SEM image of the cross-section of a separator for a redox flow battery according to Example 1.

[Modes of the Invention]

When one member is disposed "on" another member in the present specification, this includes not only a case where the one member is brought into contact with another member, but also a case where still another member is present between the two members.

When one part "includes" one constituent element in the present specification, unless otherwise specifically described, this does not mean that another constituent element is excluded, but means that another constituent element may be further included.

In the present specification, a weight average molecular weight (g/mol) may be a converted value with respect to polystyrene as determined by gel permeation chromatography (GPC).

In the present specification, the thickness of a member may be measured using a micrometer.

The present inventors recognized the reduction in efficiency of a battery due to high resistance of a separator in which a coating layer is formed on the surface of a porous substrate, and performed a study to solve this problem. As a result of studies as described above, the present inventors confirmed that when an ionomer coating layer with a diameter of ion clusters adjusted was formed on the surface of a porous substrate, the internal resistance of the separator is lowered, and furthermore, it was possible to improve the durability of the separator by suppressing pinhole formation due to zinc dendrites, and to prevent the crossover of charged active materials in an electrolytic solution, thereby completing the present invention.

Hereinafter, the present invention will be described in detail.

An exemplary embodiment of the present invention provides a separator for a redox flow battery, the separator comprising: a porous substrate; and an ionomer coating layer provided on at least one surface of the porous substrate, wherein the ionomer coating layer comprises an ion conductive resin containing ion clusters having a diameter in the range of $3 \text{ nm} < d_c < 6 \text{ nm}$, as measured by small-angle X-ray scattering (SAXS) in water at 25°C.

When the diameter of the ion clusters is adjusted as in the above range, ions move smoothly through the ion clusters, so that the internal resistance of the separator may be lowered. Specifically, when the diameter of the ion clusters is less than the above range, since the movement of ions such as $Zn^{2+}$, $Br^-$, and $H^+$ is limited, voltage efficiency may be lowered due to the increase in internal resistance and the intensification of the polarization phenomenon. In contrast, when the diameter of the ion clusters exceeds the above range, since the crossover of the charged active materials cannot be effectively limited, the self-discharge rate may be increased and charge quantity efficiency may be lowered.

According to an exemplary embodiment of the present invention, the ion clusters may be hydrophilic ion clusters.

The diameter ($d_c$) of the ion clusters, as measured by small-angle X-ray scattering (SAXS) may be obtained by the following General Equation 1.

$$[\text{General Equation 1}]$$

$$d_c = (6Vc/\pi)^{1/3}$$

in General Equation 1, Vc is a volume of a cubic lattice obtained by the following General Equation 2,

$$[\text{General Equation 2}]$$

$$Vc = \{\Delta V/(1+\Delta V)\}d^3 + N_P V_P$$

in General Equation 2, d is a Bragg spacing obtained by the following General Equation, $N_P$ is the number of ion exchange sites, $V_P$ is the volume of ion exchange sites, and $\Delta V$ is the amount of change in volume of the separator before and after water swelling,

$$[\text{General Equation 3}]$$

$$d(\text{Bragg spacing}) = 2\pi/q$$

in General Equation 3, q is a scattering factor obtained by the following General Equation 4, and

$$[\text{General Equation 4}]$$

$$q = (4\pi/\lambda)\times\sin(2\theta/2)$$

in General Equation 4, $\lambda$ is the wavelength of an X-ray, and $\theta$ is a scattering angle.

The ion conductive resin may be a polymer that facilitates selective ion exchange. A separator including such an ion conductive resin as a coating layer suppresses the crossover of the charged active materials in an electrolyte, so that it is possible to minimize a deterioration in efficiency of the redox flow battery due to self-discharge. Further, a separator including the ion conductive resin as a coating layer facilitates the movement of ions in the electrolyte, so that the internal resistance of the separator is lowered, and furthermore, the efficiency of the redox flow battery can be improved.

The ion conductive resin may include a hydrophobic region in which the main chain is present and a hydrophilic region in which side chains of hydrophilic functional groups are present, and ions in the electrolyte may move through a plurality of ion clusters located in the hydrophilic region. The plurality of ion clusters may function as a passage for movement of ions by being continuously located in the thickness direction of the separator.

As the ion conductive resin, various polymers having an ion conductive functional group may be used, and specifically, a polymer having a functional group having an ability to exchange cations may be used. More specifically, according to an exemplary embodiment of the present invention, the ion conductive resin may include at least one selected from the group consisting of a sulfonated tetrafluoroethylene-based polymer, sulfonated polyimide (sPI), sulfonated poly(arylene ether sulfone) (sPAES), sulfonated polyetheretherketone (sPEEK), sulfonated polyetherketone (sPEK), poly(vinylidene fluoride)-graft-poly(styrene sulfonic acid (PVDF-g-PSSA) and sulfonated poly(fluorenyl ether ketone).

According to an exemplary embodiment of the present invention, the ion conductive resin may be a sulfonated tetrafluoroethylene polymer, such as Nafion® (Dupont), Aquivion® (Solvay), Flemion™ (AGC Chemicals Company), or Aciplex™ (Asahi Kasei).

According to an exemplary embodiment of the present invention, the ionomer coating layer may have a thickness

of 1 $\mu$m or more and 200 $\mu$m or less. When the thickness of the coating layer is less than the above range, the crossover reduction effect of charged active materials (for example, $Br_2$-complex) may not be sufficiently implemented, and when the thickness of the coating layer exceeds the above range, a problem in that the efficiency of the battery is decreased by high internal resistance may occur.

According to an exemplary embodiment of the present invention, the separator for a redox flow battery may have an internal resistance of 300 m$\Omega$ or less. The separator for a redox flow battery has an internal resistance of 300 m$\Omega$ or less, which is realized at a low level, and thus can contribute to an improvement in efficiency of the redox flow battery.

According to an exemplary embodiment of the present invention, a material constituting the ionomer coating layer may not be included in an inner layer of the porous substrate. Specifically, the ionomer coating layer is provided on the surface of the porous substrate, and thus may not be included in the internal pores of the porous substrate. More specifically, a material constituting the ionomer coating layer may not be included in the internal pores at a depth of 100 $\mu$m or more from the surface of the porous substrate. Furthermore, the material of the ionomer coating layer that has partially permeated into the surface pore of the porous substrate may serve to improve the bonding force between the porous substrate and the ionomer coating layer.

The porous substrate may form a three-dimensional network including micropores to provide a passage for movement of ions produced by charging and discharging of a redox flow battery, and may serve to isolate charged active materials to be produced.

According to an exemplary embodiment of the present invention, the porous substrate may include at least one resin selected from the group consisting of polypropylene, polytetrafluoroethylene, polyvinylidene fluoride, polyamide, polyimide, polybenzoxazole, polyethylene terephthalate, polyethylene, polysulfone and polyethersulfone. Specifically, the porous substrate may be a polyolefin-based porous substrate including a polyolefin-based resin. The resin may be a main material that forms a three-dimensional network of the porous substrate.

According to an exemplary embodiment of the present invention, the porous substrate may have a porosity of 30 vol% or more and 70 vol% or less, 40 vol% or more and 60 vol% or less, or 45 vol% or more and 55 vol% or less. When the porous substrate has a porosity within the above range, the porous substrate may be easily impregnated with the electrolytic solution, so that the mobility of ions in the electrolytic solution may be improved, and durability may also be secured by maintaining an appropriate strength.

According to an exemplary embodiment of the present invention, pores of the porous substrate may have an average particle diameter of 10 nm or more and 200 nm, 15 nm or more and 40 nm, or 20 nm or more and 35 nm or less. When pores of the porous substrate have an average particle diameter within the above range, there are advantages in that it is possible to prevent the internal resistance of the separator from being excessively increased, and to secure the durability of the separator.

According to an exemplary embodiment of the present invention, the porous substrate may have a thickness of 5 $\mu$m or more and 1,000 $\mu$m or less. Specifically, the porous substrate may have a thickness of 10 $\mu$m or more and 700 $\mu$m or less, 20 $\mu$m or more and 500 $\mu$m or less, 20 $\mu$m or more and 200 $\mu$m or less, or 20 $\mu$m or more and 100 $\mu$m or less. When the porous substrate has a thickness within the above range, the reduction phenomenon of charge quantity may be suppressed by minimizing the crossover of the charged active materials in the electrolytic solution. Furthermore, when the porous substrate has a thickness within the above range, an appropriate voltage may be maintained by preventing the resistance from excessively increasing.

According to an exemplary embodiment of the present invention, the porous substrate may include a composite of a polyolefin-based resin and silica. Specifically, the porous substrate may be formed using a resin composition including a polyolefin-based resin and silica, and a three-dimensional network structure of the porous substrate may include a composite of a polyolefin-based resin and silica.

The silica enables an electrolytic solution to be more easily permeate into the separator for a redox flow battery. The silica particles may include a siloxane structure which is a bond between a silicon atom and an oxygen atom, and the siloxane structure may include four subunits represented by monofunctional (M), difunctional (D), trifunctional (T), and quadrifunctional (Q) depending on the number of organic groups bonded to a silicon atom.

According to an exemplary embodiment of the present invention, the silica may include precipitated silica, fumed silica or a mixture thereof.

The precipitated silica may include: silica produced by neutralizing an aqueous solution produced using silicate soda produced using silica sand as a raw material to precipitate silica, filtering and drying the precipitated silica; silica produced by a hydrolysis reaction using alkoxy silane instead of silicate soda; or the like. The precipitated silica may have an average particle diameter of 100 nm to 200 nm, 120 nm to 190 nm, or 140 nm to 180 nm.

The fumed silica may include: silica obtained by thermally decomposing silane tetrachloride ($SiCl_4$) at a high temperature (1,100°C); silica produced by a method of heating silica under vacuum at a high temperature and depositing the heated silica on a cold surface; or the like. The fumed silica may have an average particle diameter of 4 nm to 30 nm, 8 nm to 25 nm, or 12 nm to 20 nm.

According to an exemplary embodiment of the present invention, the silica may be fumed silica. When fumed silica having smaller primary particles than precipitated silica and hydrophilic characteristics is applied to the polyolefin-based porous substrate, better performance may be realized.

According to an exemplary embodiment of the present invention, the fumed silica may include agglomerated particles. Specifically, according to an exemplary embodiment of the present invention, the fumed silica may include agglomerated particles containing primary particles having an average particle diameter of 1 nm to 100 nm. More specifically, the primary particles included in the agglomerated particles may have an average particle diameter of 10 nm to 80 nm, 15 nm to 50 nm, or 20 nm to 30 nm.

The primary particles included in the agglomerated particles have a three-dimensional bond structure of siloxane and have a spherical shape without fine pores, and the primary particles may form agglomerated particles while being agglomerated or bonded to each other by siloxane bonds. When the primary particles included in the agglomerated particles have an average particle diameter within the above range, the pore size of the composite separator is appropriately adjusted, so that the voltage efficiency of a redox flow battery may be improved by preventing the crossover of a charged active materials in the electrolytic solution and allowing the electrolytic solution to smoothly permeate.

Another exemplary embodiment of the present invention provides a method for manufacturing the redox flow battery, the method comprising: (a) preparing a porous substrate; (b) forming an ionomer coating layer by applying an ionomer coating composition comprising an ion conductive resin and propylene carbonate on at least one surface of the porous substrate; and (c) removing the remaining propylene carbonate in the ionomer coating layer.

In step (a), a commercially available porous substrate may be purchased, or the porous substrate may be produced using the above-described resin, specifically, a polyolefin-based resin. When the porous substrate is produced, the porous substrate may be produced by various methods known in the art.

According to an exemplary embodiment of the present invention, the ionomer coating composition may further include an organic solvent. Specifically, the ionomer coating composition may be an ionomer coating composition in which the ion conductive resin and propylene carbonate are dissociated in an organic solvent.

According to an exemplary embodiment of the present invention, the organic solvent may include at least one selected from the group consisting of N-methyl-2-pyrrolidone (NMP), N,N-dimethylacetamide (DMAc), dipropylene glycol (DPG), ethylene glycol (EG), propylene glycol (PG) and isopropyl alcohol (IPA).

The ion conductive resin is a main material which constitutes the ionomer coating layer, and the diameter of ion clusters may be adjusted by the propylene carbonate. That is, the propylene carbonate included in the ionomer composition may serve to adjust the diameter of the ion clusters of the ion conductive resin.

According to an exemplary embodiment of the present invention, the content of the ion conductive resin may be 2 wt% or more and 20 wt% or less, 3 wt% or more and 10 wt% or less, or 3 wt% or more and 7 wt% or less based on 100 wt% of the ionomer coating composition.

According to an exemplary embodiment of the present invention, the content of the propylene carbonate may be 1 wt% or more and 50 wt% or less based on 100 wt% of the ionomer coating composition. Specifically, the content of the propylene carbonate may be 2 wt% or more and 20 wt% or less, 3 wt% or more and 10 wt% or less, or 3 wt% or more and 7 wt% or less based on 100 wt% of the ionomer coating composition. When the content of the propylene carbonate is within the above range, the movement of ions in the electrolytic solution may be facilitated by adjusting the diameter of the ion clusters of the ion conductive resin to be larger.

According to an exemplary embodiment of the present invention, the content of the organic solvent may be the balance excluding the content of the ionic conductive resin and the content of the propylene carbonate in the ionomer coating composition.

According to an exemplary embodiment of the present invention, a weight ratio of the ion conductive resin and the propylene carbonate may be 10 : 1 to 1 : 2. Specifically, the weight ratio of the ion conductive resin and the propylene carbonate may be 5 : 1 to 1 : 2, 2 : 1 to 1 : 2, 1.5 : 1 to 1 : 1.5, or 1.2 : 1 to 1 : 1.2.

In step (b), the ionomer coating composition may be applied on one surface of the porous substrate using various methods such as Meyer bar coating, doctor blade coating, slot die coating, comma bar coating, and spin coating.

According to an exemplary embodiment of the present invention, in step (b), the ionomer coating composition may be coated to a thickness of 0.1 μm or more and 1,000 μm or less.

According to an exemplary embodiment of the present invention, step (b) may further include applying the ionomer coating composition, and then drying the ionomer coating composition. A solid phase coating layer may be formed by removing the remaining organic solvent through the drying of the ionomer coating composition. Specifically, the drying of the ionomer coating composition may be performed at 50°C to 150 °C for 30 minutes to 8 hours. When the drying of the ionomer coating composition is performed at a temperature of less than 50°C or for less than 30 minutes, the organic solvent may not be sufficiently removed, so that properties of the ionomer coating layer may be affected. Further, when the drying of the ionomer coating composition is performed at a temperature of more than 150°C or for more than 8 hours, since the porous substrate is caused to be denatured, properties of the separator may deteriorate.

According to an exemplary embodiment of the present invention, step (c) may remove the propylene carbonate by impregnating the porous substrate with deionized water. Through step (c), the ionomer coating layer may be substantially free of the propylene carbonate, and the diameter of the ion clusters may be maintained at a size of the diameter adjusted by the propylene carbonate.

Still another exemplary embodiment of the present invention provides a redox flow battery comprising the separator. Specifically, the redox flow battery may be a zinc-bromine redox flow battery.

The redox flow battery may include structures and configurations known in the art, except that the above-described composite separator according to the present invention is applied. For example, the redox flow battery may include: a unit cell including a separator and an electrode; a tank in which an electrolytic solution is stored; and a pump that circulates an electrolytic solution between the unit cell and the tank.

In addition, the redox flow battery may include a module including one or more of the unit cells. Furthermore, the redox flow battery may further a flow frame. The flow frame may not only serve as a passage for movement of the electrolytic solution, but also provide a uniform distribution of the electrolytic solution between the electrode and the separator such that the electrochemical reaction of an actual battery smoothly occurs. The flow frame may be provided as a film having a thickness of 0.1 mm to 15.0 mm, which includes a polymer such as polyethylene, polypropylene or polyvinyl chloride.

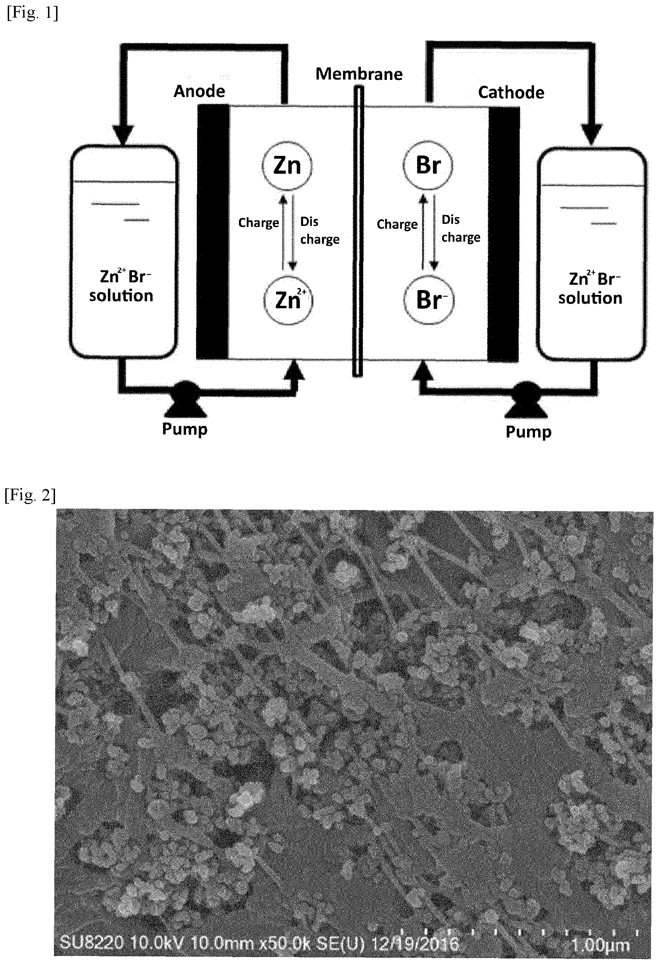

FIG. 1 illustrates a conceptual view of a general zinc-bromine redox flow battery. Specifically, FIG. 1 illustrates a zinc-bromine redox flow battery driven while supplying an electrolytic solution stored in an electrolytic tank to each of an anode region and a cathode region separated by a separator through a pump. As described above, the redox flow battery according to the present invention may have a structure such as the zinc-bromine redox flow battery illustrated in FIG. 1, except that the above-described separator is applied.

Hereinafter, the present invention will be described in detail with reference to Examples for specifically describing the present invention. However, the Examples according to the present invention may be modified into various different forms, and it should not be interpreted that the scope of the present invention is limited to the Examples to be described below. The Examples of the present specification are provided for more completely describing the present invention to those with ordinary skill in the art.

**[Example 1]**

After perfluorosulfonic acid (Asahi Kasei, SS-700c) was dissolved at about 5 wt% in dimethylformamide, an ionomer coating composition was produced by adding propylene carbonate in a content of about 5 wt% thereto.

After the produced ionomer coating composition was applied to a thickness of about 75 $\mu$m on one surface of a polyethylene porous substrate (Asahi, SF-601, thickness: 0.6 mm, porosity: 50% to 60%) including fumed silica, an organic solvent of the coating layer was removed by drying the polyethylene porous substrate in an oven at about 80°C for 6 hours. Furthermore, a separator for a redox flow battery including an ionomer coating layer having a thickness of about 2 to 3 $\mu$m was manufactured by impregnating the dried porous substrate with deionized water at room temperature (25°C) for 6 hours to remove the remaining propylene carbonate in the coating layer.

**[Comparative Example 1]**

A polyethylene porous substrate (Asahi, SF-601, thickness: 0.6 mm, porosity: 50% to 60%) including fumed silica was used as a separator for a redox flow battery without providing a separate coating layer.

**[Comparative Example 2]**

A separator for a redox flow battery was manufactured in the same manner as in Example 1, except that propylene carbonate was not included in the ionomer coating composition.

**[Experimental Example 1: Morphological analysis of surface of separator for redox flow battery]**

In order to analyze the surface morphology of the separators for a redox flow battery manufactured according to Example 1 and Comparative Example 1, the surface of the manufactured separator was coating-treated with osmium, and then analyzed using a field emission scanning electron microscope (FE-SEM, HITACHI SU8220).

FIG. 2 illustrates an FE-SEM image of the surface of a separator for a redox flow battery according to Comparative Example 1.

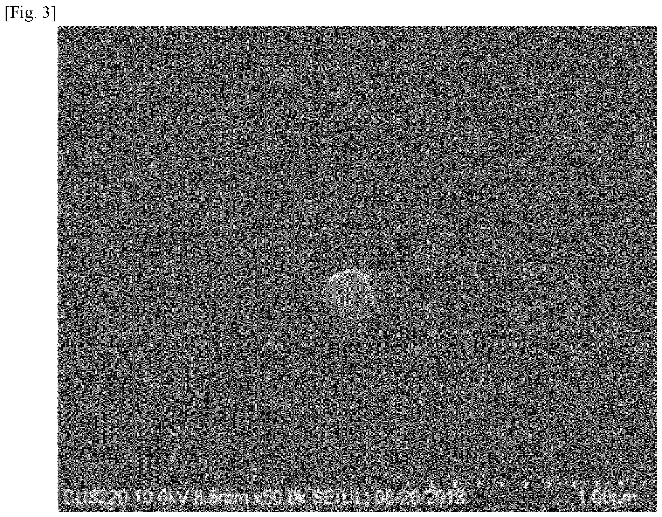

FIG. 3 illustrates an FE-SEM image of the surface of a separator for a redox flow battery according to Example 1.

According to FIGS. 2 and 3, it can be confirmed that on the surface of the separator for a redox flow battery according to Example 1 in which an ionomer coating layer is formed, a compact layer is formed unlike Comparative Example 1 having a porous surface.

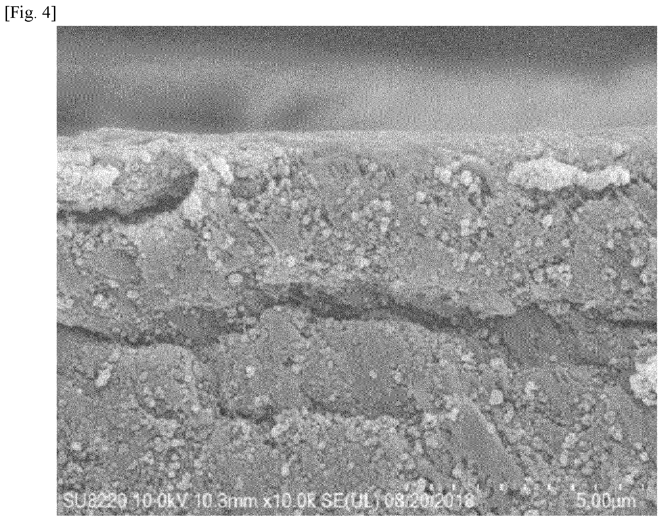

FIG. 4 illustrates an FE-SEM image of the cross-section of a separator for a redox flow battery according to Comparative Example 1.

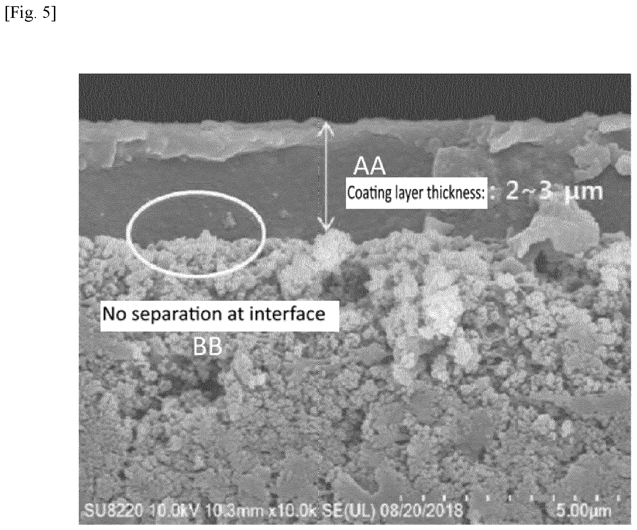

FIG. 5 illustrates an FE-SEM image of the cross-section of a separator for a redox flow battery according to Example 1.

According to FIG. 5, it can be confirmed that the separator for a redox flow battery according to Example 1 is formed while the ionomer coating layer is brought into close contact with the porous substrate without impregnating internal pores of the separator with the material of the ionomer coating layer.

**[Experimental Example 2: Measurement of internal resistance of separator for redox flow battery]**

In order to measure the internal resistance of a separator for a redox flow battery, a single battery having a structure, in which a flow frame for forming a flow path such that an electrolytic solution could move on both sides of each of the separators for a redox flow battery manufactured according to Example 1 and Comparative Example 2, an electrode which allows electrons to move, and an end plate which maintained the shape of a single battery and served as a support were sequentially stacked, was manufactured. Furthermore, the internal resistance of the separator for a redox flow battery was measured by circulating an electrolytic solution having a state of charge (SOC) of 0% for 3 hours and using a DC resistance measuring device. The internal resistance of the separator for a redox flow battery measured as described above is summarized in the following Table 1.

[Table 1]

|  | Internal resistance (m$\Omega$) | Diameter (nm) of ion clusters |
|---|---|---|
| Example 1 | 273 | $3 < d_c < 6$ |
| Comparative Example 2 | 383 | $2 < d_c < 3$ |

The diameter of ion clusters in Table 1 was measured using small-angle X-ray scattering (SAXS) in water at 25°C.

According to the results in Table 1, it can be seen that the diameter of hydrophilic ion clusters of the ionomer coating layer in Comparative Example 2 is formed to be smaller than that of Example 1 to lower the ion exchange ability, and as a result, the internal resistance value of the separator for a redox flow battery is shown to be higher than that of the separator for a redox flow battery according to Example 1.

**[Experimental Example 3: Measurement of efficiency of zinc-bromine redox flow battery]**

Charging and discharging were performed by supplying an electrolytic solution in an electrolytic solution vessel to the single battery manufactured as in Example 2 through a pump and applying electric current thereto through a charging and discharging device.

Charging and discharging were performed under conditions of a system total charge quantity of 2.98 Ah, an electrolytic solution utilization rate of 40% (SOC 40), a charge of 20 mA/cm$^2$, a discharge of 20 mA/cm$^2$, and 0.01 V or more using a product manufactured by WonATech Co., Ltd. as the charging and discharging device, and after one time of charging/discharging, a test was performed by setting one time of stripping as one cycle. The efficiency of the zinc-bromine redox flow battery measured as described above and the initial internal resistance before the start of each cycle are summarized in the following Table 2.

[Table 2]

|  | Number of cycles | Average efficiency [%] | | | Average initial internal resistance [mΩ] |
|---|---|---|---|---|---|
|  |  | Energy | Voltage | Charge quantity |  |
| Comparative Example 1 | 3 | 72.30 | 80.40 | 89.90 | 268 |
| Comparative Example 2 | 4 | 72.60 | 79.40 | 91.50 | 383 |
| Example 1 | 4 | 74.40 | 81.90 | 90.80 | 273 |

* Energy efficiency (EE) = (Discharge energy (W·h) / Charge energy (W·h)) × 100

* Voltage efficiency (VE) = (Energy efficiency / Charge quantity efficiency) × 100

* Charge quantity efficiency (Current efficiency (CE)) = (Discharge capacity (A·h) / Charge capacity (A·h)) × 100

According to the results of Table 2, it can be seen that the separator for a redox flow battery according to Example 1, which includes an ionomer coating layer with the diameter of hydrophilic ion clusters adjusted exhibits higher energy efficiency than the separator for a redox flow battery according to Comparative Example 1, which does not include a separate coating layer and the separator for a redox flow battery according to Comparative Example 2, which includes an ionomer coating layer with the diameter of hydrophilic ion clusters not adjusted. In particular, the separator of Example 1 had smooth ion exchange by the separator, and thus showed low internal resistance compared to Comparative Example 2 including an ionomer coating layer containing no propylene carbonate. Through this, it can be seen that the separator for a redox flow battery according to Example 1 has more smooth ion exchange in the electrolyte by adjusting the diameter of the hydrophilic ion clusters in the ionomer coating layer.

**Claims**

1.  A separator for a redox flow battery, the separator comprising: a porous substrate; and an ionomer coating layer provided on at least one surface of the porous substrate,
    wherein the ionomer coating layer comprises an ion conductive resin containing ion clusters having a diameter in the range of $3 \text{ nm} < d_c < 6 \text{ nm}$, as measured by small-angle X-ray scattering (SAXS) in water 25°C.

2.  The separator of claim 1, wherein the ionomer coating layer has a thickness of 1 μm or more and 200 μm or less.

3.  The separator of claim 1, wherein the separator for a redox flow battery has an internal resistance of 300 mΩ or less.

4.  The separator of claim 1, wherein the ion conductive resin comprises at least one selected from the group consisting of a sulfonated tetrafluoroethylene-based polymer, sulfonated polyimide (sPI), sulfonated poly(arylene ether sulfone) (sPAES), sulfonated polyetheretherketone (sPEEK), sulfonated polyetherketone (sPEK), poly(vinylidene fluoride)-graft-poly(styrene sulfonic acid (PVDF-g-PSSA) and sulfonated poly(fluorenyl ether ketone).

5.  The separator of claim 1, wherein the porous substrate comprises at least one resin selected from the group consisting of polypropylene, polytetrafluoroethylene, polyvinylidene fluoride, polyamide, polyimide, polybenzoxazole, polyethylene terephthalate, polyethylene, polysulfone and polyethersulfone.

6.  The separator of claim 1, wherein the porous substrate comprises a composite of a polyolefin-based resin and silica.

7.  A method for manufacturing the separator for a redox flow battery of any one of claims 1 to 6, the method comprising: (a) preparing a porous substrate; (b) forming an ionomer coating layer by applying an ionomer coating composition comprising an ion conductive resin and propylene carbonate on at least one surface of the porous substrate; and (c) removing the remaining propylene carbonate in the ionomer coating layer.

8.  The method of claim 7, wherein a content of the propylene carbonate is 1 wt% or more and 50 wt% or less based on 100 wt% of the ionomer coating composition.

9.  The method of claim 7, wherein the ionomer coating composition further comprises at least one organic solvent selected from the group consisting of N-methyl-2-pyrrolidone (NMP), N,N-dimethylacetamide (DMAc), dipropylene glycol (DPG), ethylene glycol (EG), propylene glycol (PG) and isopropyl alcohol (IPA).

[Fig. 1]

[Fig. 2]

SU8220 10.0kV 10.0mm x50.0k SE(U) 12/19/2016          1.00μm

[Fig. 3]

SU8220 10.0kV 8.5mm x50.0k SE(UL) 08/20/2018     1.00µm

[Fig. 4]

[Fig. 5]

## INTERNATIONAL SEARCH REPORT

| | International application No. |
| --- | --- |
| | **PCT/KR2019/016237** |

**A.    CLASSIFICATION OF SUBJECT MATTER**

*H01M 8/1053(2016.01)i, H01M 8/106(2016.01)i, H01M 8/1067(2016.01)i, H01M 8/1081(2016.01)i, H01M 8/18(2006.01)i*

According to International Patent Classification (IPC) or to both national classification and IPC

**B.    FIELDS SEARCHED**

Minimum documentation searched (classification system followed by classification symbols)
H01M 8/1053; C08K 3/08; C08K 3/22; H01M 8/02; H01M 8/10; H01M 8/18; H01M 8/106; H01M 8/1067; H01M 8/1081

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: redox flow battery, separator, ionomer coating layer, ion cluster, propylene carbonate, ion conductive resin

**C.    DOCUMENTS CONSIDERED TO BE RELEVANT**

| Category* | Citation of document, with indication, where appropriate, of the relevant passages | Relevant to claim No. |
| --- | --- | --- |
| X | KIM, Hyun Gyu et al. Propylene carbonate-derived size modulation of water cluster in pore-filled Nafion/polypropylene composite membrane for the use in vanadium redox flow batteries. Journal of Industrial and Engineering Chemistry. 26 November 2017 (Online publication date), vol. 60, pages 401-406 See pages 402-406; and figures 1(a)-4(g). | 1-9 |
| A | KR 10-2017-0064837 A (SKC CO., LTD. et al.) 12 June 2017 See the entire document. | 1-9 |
| A | KR 10-2014-0098189 A (ASAHI KASEI E-MATERIALS CORPORATION et al.) 07 August 2014 See the entire document. | 1-9 |
| A | US 5162427 A (CRAUN, Gary P. et al.) 10 November 1992 See the entire document. | 1-9 |
| PX | WO 2019-050272 A1 (LOTTE CHEMICAL CORPORATION et al.) 14 March 2019 See pages 3-15; and figures 1, 2. | 1-9 |

|  | Further documents are listed in the continuation of Box C. | ☒ | See patent family annex. |
| --- | --- | --- | --- |

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 MARCH 2020 (24.03.2020) | **25 MARCH 2020 (25.03.2020)** |

| Name and mailing address of the ISA/KR | Authorized officer |
| --- | --- |
| Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Telephone No. |

Form PCT/ISA/210 (second sheet) (January 2015)

International application No.

**PCT/KR2019/016237**

| Patent document cited in search report | Publication date | Patent family member | Publication date |
|---|---|---|---|
| KR 10-2017-0064837 A | 12/06/2017 | KR 10-1684036 B1 | 07/12/2016 |
| KR 10-2014-0098189 A | 07/08/2014 | AU 2012-361558 A1 | 17/07/2014 |
| | | AU 2012-361558 B2 | 17/03/2016 |
| | | CN 104115322 A | 22/10/2014 |
| | | CN 104115322 B | 07/09/2016 |
| | | CN 105845958 A | 10/08/2016 |
| | | CN 105845958 B | 06/04/2018 |
| | | EP 2800191 A1 | 05/11/2014 |
| | | EP 2800191 B1 | 10/10/2018 |
| | | EP 2800191 B8 | 19/12/2018 |
| | | IN 1284MUN2014 A | 03/07/2015 |
| | | JP 6005065 B2 | 12/10/2016 |
| | | KR 10-1684036 B1 | 07/12/2016 |
| | | TW 201338240 A | 16/09/2013 |
| | | TW I499108 B | 01/09/2015 |
| | | US 2014-0377687 A1 | 25/12/2014 |
| | | US 9799906 B2 | 24/10/2017 |
| | | WO 2013-100079 A1 | 04/07/2013 |
| US 5162427 A | 10/11/1992 | US 5025063 A | 18/06/1991 |
| WO 2019-050272 A1 | 14/03/2019 | KR 10-2019-0026530 A | 13/03/2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4190707 A

- KR 1042931